# DEMANDE DE BREVET EUROPEEN

(11) **EP 2 148 279 A1**
(43) Date de publication de la demande: **27.01.2010**
(21) Numéro de dépôt: 08161092.5
(22) Date de dépôt: 24.07.2008
(51) Int. Cl.: G06F 12/10

(54) **Méthode de mise à jour de données dans des mémoires utilisant une unité de gestion mémoire**

(71) Demandeur: Nagravision S.A., 1033 Cheseaux-sur-Lausanne (CH)
(72) Inventeur: Gremaud, Fabien, 1618, Châtel-St-Denis (CH)
(74) Mandataire: Leman Consulting S.A.

(57) **Abrégé**

Méthode de mise à jour, exécutée par une application, de données stockées dans une pluralité de mémoires physiques connectées à une unité de gestion mémoire pilotée par un microprocesseur, ladite unité de gestion mémoire effectue une transaction de mise à jour en traduisant des adresses de pages mémoire virtuelles en adresses de pages mémoire physiques en parcourant une table des pages des données stockées dans les mémoires, lesdites pages étant parcourues en suivant une pluralité de pointeurs d'adresse en cascade formant une arborescence. La méthode est caractérisée par les étapes suivantes:
- ajout par l'unité de gestion mémoire d'un premier attribut de version O définissant des pointeurs d'une première sous-arborescence SA1 utilisée par la table des pages TP de l'unité de gestion mémoire MMU pour l'accès courant de l'application aux pages mémoire physiques P1',
- ajout d'un second attribut de version E définissant des pointeurs utilisés pour la mise à jour de données dans lesdites pages mémoire P1'.
- sélection par l'application d'un ensemble de pages mémoire libres avec des adresses physiques désignées par des pointeurs définis par le premier attribut de version O et des pointeurs définis par le second attribut de version E, lesdits pointeurs formant une seconde sous-arborescence SA2,
- mise à jour des données des pages mémoire physiques sélectionnées désignées par les pointeurs de la seconde sous-arborescence SA2,
- configuration par l'unité de gestion mémoire MMU de la table des pages TP de sorte que l'application utilise les pointeurs de la seconde sous-arborescence SA2 pour l'accès courant aux pages mémoire physiques au lieu des pointeurs de la première sous-arborescence SA1 utilisés avant la mise à jour.

## Description

### Domaine de l'invention

La présente invention concerne les dispositifs portables comprenant un ou plusieurs microprocesseurs exécutant diverses tâches grâce à un ou des logiciels comprenant du code machine et des données stockés dans des mémoires. Plus particulièrement, la méthode de l'invention est destinée à effectuer des mises à jour partielles ou complètes du ou des logiciels en mettant à contribution une unité de gestion mémoire associée au microprocesseur.

### Arrière plan technique

Un microprocesseur contrôle la mémoire avec un système de gestion de mémoire qui est communément implémenté sous forme matérielle et logicielle. La partie matérielle du système constitue une unité de gestion mémoire (MMU) qui peut être incluse dans le microprocesseur ou être sous la forme d'un composant séparé, soit intégré sur la même puce que le microprocesseur, soit former un circuit intégré distinct connecté au microprocesseur et à la mémoire.

L'unité de gestion mémoire (MMU) effectue des transactions de mémoire incluant des fonctions de traduction d'adresses virtuelles en adresses physiques, de protection de la mémoire et le contrôles des mémoires cache.

Les microprocesseurs actuels supportent pour la plupart la notion de mémoire virtuelle. Dans un système de mémoire virtuelle, les instructions d'un programme exécutées par le microprocesseur se réfèrent à des données utilisant des adresses virtuelles dans un espace mémoire virtuel du microprocesseur. Cet espace peut être beaucoup plus grand que l'espace mémoire physique à disposition dans le système.

Les adresses virtuelles du microprocesseur sont traduites par une unité de gestion mémoire (MMU) en adresses physiques utilisées pour l'accès à la mémoire système ou à d'autres dispositifs de stockage. La mémoire virtuelle utilise un mécanisme de pagination pour traduire ou faire correspondre les adresses virtuelles à des adresses physiques. L'espace mémoire physique est divisé en page physiques de taille fixe (par exemple de 4 kilo-octets). Les adresses virtuelles comprennent une portion d'adresse de page et une portion de décalage de page (offset). L'adresse de page virtuelle est traduite par le mécanisme de pagination en adresse de page physique. Le décalage de page spécifie un décalage physique dans la page physique c'est-à-dire un décalage à partir de l'adresse de la page physique.

La pagination de la mémoire permet l'exécution de programmes avec un espace de mémoire virtuelle plus grand que l'espace mémoire physique existant. De plus, la pagination facilite le déplacement de programmes dans différentes positions de mémoire physique pendant des exécutions du programme multiples ou différentes. La pagination permet également l'exécution simultanée par le microprocesseur de processus multiples, chaque processus accédant à ses propres pages de mémoire physiques allouées sans devoir être recueillies à partir du disque dur par exemple et sans devoir dédier toute la mémoire physique à un seul processus. La protection de la mémoire d'autres processus peut être également facilitée sur la base de la pagination.

La traduction de l'adresse de la page virtuelle vers l'adresse de la page physique est effectuée par un parcours d'une table des pages (page table walk). Le logiciel d'exploitation du microprocesseur utilise, maintient et stocke dans la mémoire système des tables de pages contenant des informations pour traduire une adresse de page virtuelle en une adresse de page physique. Par conséquent il est relativement onéreux de réaliser une opération de parcours de la table des pages, lorsque des accès mémoire multiples doivent être effectués pour la traduction. Le parcours de la table des pages est effectué par le matériel, le logiciel ou par une combinaison des deux.

Afin d'améliorer les performances du système en réduisant le nombre de parcours de la table des pages, de nombreux microprocesseurs bénéficient d'un mécanisme de mémorisation en cache d'informations de la table des pages. Ces informations comprennent des adresses de pages physiques traduites à partir d'adresses de pages virtuelles utilisées récemment. Cette mémoire cache d'informations de pages est communément désignée par "mémoire tampon de traduction des adresses de pages" (Translation lookaside buffer) ou par "cache TLB". L'adresse de page virtuelle est fournie au cache TLB qui effectue une recherche de cette adresse. Lorsque cette adresse est trouvée, le cache TLB fournit directement l'adresse de la page physique correspondante sans effectuer le parcours de la table des pages pour la traduction. Ainsi les performances du système comme la rapidité d'exécution des processus sont augmentées grâce à cette conversion directe d'adresses.

Lorsqu'il s'agit d'effectuer une mise à jour partielle ou complète du logiciel stocké de manière discontinue dans plusieurs types de mémoires tel que ROM (Read Only Memory), mémoire à lecture seule, NVM (Non-Volatile Memory), mémoire non volatile, RAM (Random Access Memory), mémoire à accès aléatoire, etc., l'unité de gestion mémoire et le mécanisme de pagination facilitent grandement les opérations.

La mise à jour d'un système peut être réalisée selon une première solution consistant à stocker le nouveau logiciel dans une mémoire physique non-volatile libre et à modifier la table des pages. Ainsi le processeur utilisera les adresses virtuelles pointant vers les adresses physiques de la mémoire dans laquelle est stocké le nouveau logiciel. Lorsque l'application d'installation de la mise à jour ne doit pas être elle-même mise à jour, une application spécifique invariable se charge de la mise à jour du logiciel concerné selon un mécanisme relativement simple. Le système fonctionnera avec l'ancien logiciel tant que la mise à jour n'est pas terminée et commute vers le nouveau logiciel seulement si ce dernier est complètement installé et vérifié par une séquence de contrôle comme un checksum ou un hash.

Lorsqu'une seule application incluant également l'application d'installation de la mise à jour doit être renouvelée dans un système, l'application passe par un état instable pendant le processus de modification. La sécurité d'une telle application en cours de modification dépend de la fiabilité des instructions ou des commandes utilisées pour la mise à jour. Cette situation de vulnérabilité de l'application ne peut être acceptable dans le domaine des cartes à puces ou des modules de sécurité exigeant un niveau de sécurité élevé. De plus, l'opération de mise à jour peut échouer ou s'interrompre de manière inattendue ce qui nécessite un mécanisme de restauration vers l'état précédent du système relativement complexe. Cette restauration implique également un passage du système par un état instable mettant en cause la sécurité.

### Description sommaire de l'invention

Le but de l'invention est d'effectuer une mise à jour complète ou partielle d'un logiciel d'un système de manière fiable en évitant les états transitoires instables ou incohérents générant des failles de sécurité du système. Un autre but est la réalisation d'une mise à jour sûre dans un environnement disposant d'un espace mémoire limité comme dans le domaine des supports de données portables comportant un logiciel de fonctionnement embarqué.

Ce but est atteint par une méthode de mise à jour, exécutée par une application, de données stockées dans une pluralité de mémoires physiques connectées à une unité de gestion mémoire pilotée par un microprocesseur, ladite unité de gestion mémoire effectue une transaction de mise à jour en traduisant des adresses de pages mémoire virtuelles en adresses de pages mémoire physiques en parcourant une table des pages des données stockées dans les mémoires, lesdites pages étant parcourues en suivant une pluralité de pointeurs d'adresse en cascade formant une arborescence, la méthode est caractérisée par les étapes suivantes:
- ajout par l'unité de gestion mémoire d'un premier attribut de version définissant des pointeurs d'une première sous-arborescence utilisée par la table des pages de l'unité de gestion mémoire pour l'accès courant de l'application aux pages mémoire physiques,
- ajout d'un second attribut de version définissant des pointeurs utilisés pour la mise à jour de données dans lesdites pages mémoire.
- sélection par l'application d'un ensemble de pages mémoire libres avec des adresses physiques désignées par des pointeurs définis par le premier attribut de version et des pointeurs définis par le second attribut de version, lesdits pointeurs formant une seconde sous-arborescence,
- mise à jour des données des pages mémoire physiques sélectionnées désignées par les pointeurs de la seconde sous-arborescence,
- configuration par l'unité de gestion mémoire de la table des pages de sorte que l'application utilise les pointeurs de la seconde sous-arborescence pour l'accès courant aux pages mémoire physiques au lieu des pointeurs de la première sous-arborescence utilisés avant la mise à jour.
   La méthode de l'invention consiste à mettre à jour en arrière plan des données stockées dans des mémoires physiques sans que les opérations courantes exécutées par le microprocesseur ne soient affectées. Ce n'est que lorsque la mise à jour est entièrement terminée, l'application passe de l'ancienne à la nouvelle version des données. Ce passage se produit par une reconfiguration de la table des pages pendant laquelle la première sous-arborescence de pointeurs accédant à l'ancienne version des données des mémoires est remplacée par la seconde sous-arborescence de pointeurs permettant ainsi d'accéder à la nouvelle version des données. Cette méthode de mise à jour évite les états transitoires incohérents du système car ce dernier fonctionne avec la version précédente des données jusqu'à ce que l'installation de la nouvelle version devienne utilisable. En cas d'interruption du processus de mise à jour, l'application pourra toujours réinitialiser la mise à jour car l'ancienne version des données peut être réactivée par un retour à la configuration précédente de la table des pages.
   Un autre avantage est que cette méthode peut s'appliquer dans des systèmes à capacité mémoire limitée tels que les cartes à puces ou modules de sécurité. En effet l'ajout d'un premier attribut de version aux pointeurs de l'arborescence désignant les adresses mémoire des données de la version courante et l'ajout d'un second attribut de version à des pointeurs désignant des données à mettre à jour permet de construire deux arborescences comportant des pointeurs communs. La présence de ces pointeurs communs permet d'éviter le doublement de la capacité mémoire nécessaire au stockage de deux versions des données.

### Brève description des figures

L'invention sera mieux comprise grâce à la description détaillée qui va suivre et qui se réfère aux figures annexées données à titre d'exemples nullement limitatif.
- La figure 1 illustre un schéma bloc d'une mise à jour d'une page mémoire effectuée en modifiant l'attribut de version d'un pointeur
- La figure 2 montre une extension du schéma bloc de la figure 1 dans laquelle la mise à jour entraîne la création de trois nouvelles pages mémoire et de deux nouveaux pointeurs.

### Description détaillée de l'invention

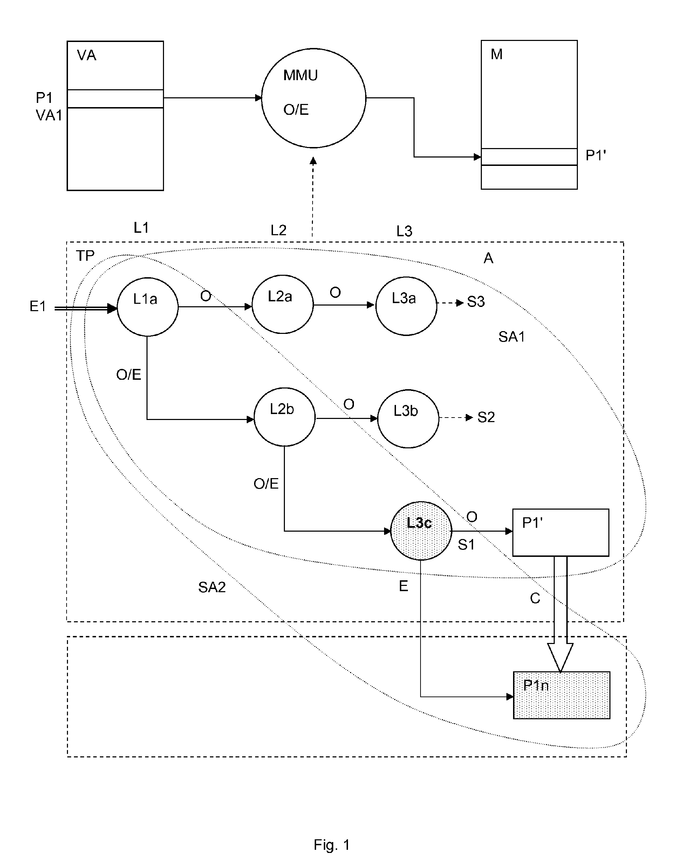

La figure 1 montre le mécanisme de la mise à jour d'une page mémoire P1 ayant une adresse virtuelle (VA) par l'intermédiaire d'une unité de gestion mémoire MMU traduisant les adresses de pages virtuelles en adresses de pages correspondant à des mémoires physiques M. Cette traduction est réalisée au moyen d'une ou plusieurs table des pages (TP) comprenant un ensemble de pointeurs que l'unité de gestion mémoire parcourt pour trouver l'adresse physique de la page mémoire désignée par l'adresse de page virtuelle VA1 de départ. Ces pointeurs sont également appelés noeuds selon la terminologie utilisées dans le domaine des unités de gestion mémoires MMU.

Selon l'invention un noeud possède un attribut O (Odd) ou un attribut E (Even) correspondant respectivement à un pointeur Odd et à un pointeur Even ou encore à une version Odd ou Even du noeud. Les pointeurs indiquent soit un autre pointeur Odd ou Even d'un autre noeud soit l'adresse physique de la page mémoire qui peut également contenir un pointeur vers des données situées à une adresse prédéterminée. Autrement dit, un noeud réunit au moins un couple de pointeurs Odd et Even et passe à une version Odd ou Even en fonction de la version du pointeur utilisé. Selon un exemple d'implémentation, les pointeurs Odd désignent des pages de mémoire physique avec une adresse impaire tandis que les pointeurs Even désignent des pages avec une adresse paire.

Les noeuds sont répartis dans la table selon différents niveaux L1, L2, L3 et forment une arborescence A avec une entrée E1 issue de l'adresse de page virtuelle VA1 de départ et des sorties (S1, S2, S3) aboutissant à des adresses de pages de mémoires M physiques. Dans la plupart des cas, ces adresses de pages sont distribuées dans plusieurs type de mémoires, à savoir ROM (Read Only Memory), mémoire à lecture seule, NVM (Non-Volatile Memory), mémoire non volatile, RAM (Random Access Memory), mémoire à accès aléatoire, etc., et ceci de manière discontinue c'est-à-dire non consécutive où la page N+1 ne suit pas nécessairement la page N dans un même type de mémoire.

Dans l'exemple de la figure 1, l'unité de gestion mémoire MMU est configurée de manière à utiliser la version O (Odd) des noeuds avant le lancement de la mise à jour. La page de mémoire virtuelle P1 avec l'adresse VA1 correspond à la page P1' de la mémoire physique M. L'unité de gestion MMU utilisant la table des pages TP détermine l'adresse de la page P1' en parcourant une sous-arborescence SA1 de l'arborescence globale A en utilisant les pointeurs O (Odd) des noeuds L1a, L2b et L3c entre l'entrée E1 et la sortie S1 aboutissant à la page P1'. Les sorties S1 et S2 aboutissent à d'autre pages de la mémoire physique ou à d'autres noeuds (non représentés) de la sous-arborescence SA1 se terminant vers des adresses de pages physiques.

Lors d'une mise à jour, l'application sélectionne une page libre de mémoire physique en utilisant les pointeurs (E) Even des noeuds. Ainsi dans l'exemple de la figure 1, des données sont écrites dans la nouvelle page P1 n en utilisant les noeuds L1a, L2b et L3c dans leur version (E) Even formant une sous-arborescence SA2 de l'arborescence A menant vers la page mémoire P1 n.

Une fois la mise à jour effectuée l'unité de gestion mémoire modifie sa configuration de manière à utiliser le noeud L3c dans sa version Even au lieu de la version Odd pour aboutir à la nouvelle page P1 n. La version des autres noeuds L1, L2a, L2b, L3a et L3b reste inchangée.

Cette opération succédant à la modification des données dans une page de mémoire physique s'apparente à une commutation d'une première sous-arborescence SA1 vers une seconde sous-arborescence SA2 en ce qui concerne la page P1' qui sera remplacée par la page P1n. Les autre pages rattachées aux sorties S2 et S3 de l'arborescence ne sont pas modifiées et sont adressées au moyen des versions Odd des noeuds correspondants.

Selon une variante, la page P1' pointée par la version Odd du noeud L3c peut être recyclée en y écrivant le contenu de la page P1n désignée par le pointeur Even du noeud L3c. De cette manière le noeud L3c peut rester dans sa version Odd tout en désignant le contenu de la page P1' mis à jour.

Dans la terminologie des unités de gestion mémoire MMU, l'opération de changement de version d'un noeud pour désigner une nouvelle page mémoire est appelée "hardware commit". L'opération de la variante ci-dessus qui consiste à remplacer le contenu de la page pointée par le noeud en version Odd par le contenu de la page pointée par le noeud en version Even est appelée "software commit".

Une mise à jour peut bien entendu concerner plusieurs pages des différents types de mémoires à disposition de l'application du système. Toutes ces pages ont une adresse virtuelle utilisée par le microprocesseur qui sera convertie en adresses de pages physiques par le biais de la table des pages de l'unité de gestion mémoire MMU.

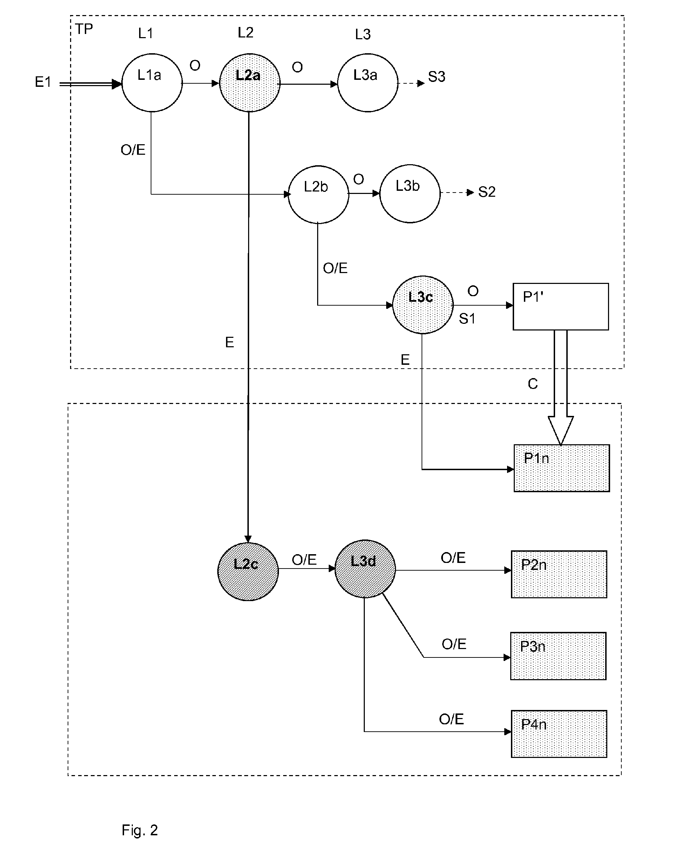

La figure 2 montre un exemple dans lequel trois pages supplémentaires par rapport à l'exemple de la figure 1 sont mises à jour. Comme dans l'exemple précédent, l'unité de gestion mémoire MMU est configurée de manière à utiliser la version O (Odd) des noeuds avant la mise à jour.

Lors d'une étape de préparation de la mise à jour, l'application explore la mémoire disponible afin de déterminer d'une part quelles pages devront être modifiées et d'autre part le nombre de pages nouvelles à allouer en fonction de la taille de la mise à jour et de celle de la mémoire.

Dans une première étape, l'application stocke des données de la mise à jour dans une page existante P1n en utilisant le pointeur Even du noeud L3c comme précédemment. De plus, l'application alloue les pages P2n, P3n et P4n pour le stockage des nouvelles données de la mise à jour ce qui nécessite la création de deux nouveaux noeuds L2c et L3d au second et troisième niveau (L2, L3) de l'arborescence. Ces nouveaux noeuds L2c et L3d seront désignés par le pointeur Even du noeud L2a situé au second niveau L2. La table des pages devient ainsi plus grande proportionnellement à l'augmentation du nombre des pages mémoire utilisées par la mise à jour. Le nombre de noeuds contenant des pointeurs Odd et Even augmente de la même manière afin d'assurer les mises à jour ultérieures en utilisant l'une ou l'autre des versions des noeuds pour pointer sur les pages appropriées.

Dans une seconde étape, lorsque les données de la mise à jour sont stockées dans les pages mémoire physiques appropriées, elles sont vérifiées avant leur mise en service par le biais de la table des pages modifiée. La vérification est de préférence effectuée à l'aide de données de contrôle formant séquence de contrôle (checksum) ou une signature résultant d'une empreinte calculée avec une fonction mathématique unidirectionnelle (Hash) et encryptée avec une clé connue du système. Ces données de contrôle portant sur tout ou partie des données de la mise à jour sont fournies avec celle-ci et stockée dans une ou plusieurs pages mémoire prédéterminées. L'application d'installation de la mise à jour recalcule ensuite ces données de contrôle avec un programme ou un algorithme correspondant en utilisant les données effectivement stockée dans les mémoires. Une comparaison réussie des données de contrôle stockées avec celles calculées permet à l'unité de gestion mémoire MMU de valider l'installation de la mise à jour et la modification de version des noeuds concernés par ladite mise à jour dans la table des pages. Lorsque la comparaison échoue, l'unité de gestion mémoire MMU bloque le passage de l'ancienne à la nouvelle version. Par conséquent, l'application fonctionnera dans les conditions précédant la mise à jour c'est-à-dire avec une version des noeuds de la table des pages qui reste inchangée.

Dans l'exemple de la figure 2, lorsque la mise à jour est installée et validée, l'opération de mise en service de la nouvelle version ou "commit" effectuée par l'unité de gestion mémoire MMU consiste à modifier la version des noeuds L2a et L3c de la version Odd à la version Even. Le pointeur de version Even du noeud de second niveau L2a désignera ainsi le nouveau noeud de second niveau L2c dont le pointeur Odd ou Even désigne le nouveau noeud de troisième niveau L3d. Ce dernier est un exemple de noeud contenant trois couples de pointeurs Odd et Even destinés à adresser les trois nouvelles pages (P2n, P3n, P4n) de mémoire physique. Ces pages sont désignées respectivement par l'un ou l'autre des pointeurs Odd ou Even du noeud L3d. L'autre pointeur de chaque couple peut être réservé à une mise à jour ultérieure de l'une ou l'autre de ces trois pages mémoire (P2n, P3n, P4n).

Le pointeur de version Even du noeud L3c du troisième niveau désigne la nouvelle première page P1n qui remplace la page P1' qui était désignée par la version Odd du noeud L3c dans l'ancienne version de la table.

La mise à jour a ainsi, en sus de l'ajout de trois nouvelles pages mémoire, modifié l'arborescence de la table des pages par la création de deux nouveaux noeuds et par le changement de version de deux autres noeuds.

Il est à noter que les noeuds d'une arborescence dans une table des pages mémoire ne sont pas tous modifiables par l'unité de gestion mémoire, c'est-à-dire capable de passer d'une version Odd à une version Even et inversement. Certains noeuds correspondent par conséquent à un seul pointeur qui reste invariable lors des mises à jour.

Étant donné que chaque noeud occupe un espace dans la mémoire système proportionnel au nombre de pointeurs associés au noeud et afin de minimiser l'espace mémoire occupé par les arborescences, les noeuds peuvent être définis par un paramètre de configuration. Ce dernier informe l'unité de gestion mémoire MMU sur le nombre de pointeurs associés au dit noeud définissant une caractéristique modifiable ou invariable du noeud. Lors d'une mise à jour, un noeud modifiable correspond à un ou plusieurs couples de pointeurs Odd/Even pouvant changer de version tandis qu'un noeud invariable correspond en général à un seul pointeur restant constant. Lorsque l'unité de gestion mémoire MMU construit une arborescence pour une nouvelle mise à jour, elle prend en compte le paramètre de configuration des noeuds pour rationaliser l'utilisation des noeuds modifiables et des noeuds invariables de manière à économiser l'espace mémoire occupé par l'arborescence.

L'exemple de la figure 2 n'est pas exhaustif au point de vue de la configuration de la table des pages utilisée pour cette mise à jour. En effet, une modification et la création d'autres noeuds à des niveaux différents peut aboutir à un résultat similaire. Autrement dit, plusieurs arborescences sont possibles dans une table des pages pour traduire un ensemble d'adresses de page mémoire virtuelle donné en un ensemble d'adresses de pages mémoire physiques correspondantes.

Afin d'accélérer le parcours de la table des pages lors de mises à jour, des adresses de pages physiques obtenues à partir des adresses virtuelles correspondantes lors de précédents parcours de la table des pages peuvent être mémorisées dans une mémoire cache associée à l'unité de gestion mémoire MMU. Cette mémoire cache appelée "mémoire tampon de traduction des adresses de pages" (Translation Lookaside Buffer) ou "cache TLB" permet d'effectuer une conversion d'adresses immédiate sans parcourir la table des pages. La taille limitée de cette mémoire cache ne permet pas de mémoriser tous les parcours de la table des pages, mais seulement les plus récents.

La mémoire cache peut par exemple contenir un pointeur dirigé vers une page mémoire physique contenant des données de contrôle que l'unité de gestion mémoire MMU utilise pour vérifier la conformité de la mise à jour avant sa validation.

## Revendications

1. Méthode de mise à jour, exécutée par une application, de données stockées dans une pluralité de mémoires physiques connectées à une unité de gestion mémoire MMU pilotée par un microprocesseur, ladite unité de gestion mémoire MMU effectue une transaction de mise à jour en traduisant des adresses de pages mémoire virtuelles en adresses de pages mémoire physiques en parcourant une table des pages des données stockées dans les mémoires, lesdites pages étant parcourues en suivant une pluralité de pointeurs d'adresse en cascade formant une arborescence, la méthode est **caractérisée par** les étapes suivantes:
- ajout par l'unité de gestion mémoire d'un premier attribut de version O définissant des pointeurs d'une première sous-arborescence SA1 utilisée par la table des pages TP de l'unité de gestion mémoire MMU pour l'accès courant de l'application aux pages mémoire physiques P1',
- ajout d'un second attribut de version E définissant des pointeurs utilisés pour la mise à jour de données dans lesdites pages mémoire P1'.
- sélection par l'application d'un ensemble de pages mémoire libres avec des adresses physiques désignées par des pointeurs définis par le premier attribut de version O et des pointeurs définis par le second attribut de version E, lesdits pointeurs formant une seconde sous-arborescence SA2,
- mise à jour des données des pages mémoire physiques sélectionnées désignées par les pointeurs de la seconde sous-arborescence SA2,
- configuration par l'unité de gestion mémoire MMU de la table des pages TP de sorte que l'application utilise les pointeurs de la seconde sous-arborescence SA2 pour l'accès courant aux pages mémoire physiques au lieu des pointeurs de la première sous-arborescence SA1 utilisés avant la mise à jour.

2. Méthode selon la revendication 1 **caractérisée en ce que** la table des pages comprend des noeuds réunissant au moins un couple de pointeurs définis respectivement par le premier attribut de version O et par le second attribut de version E, lesdits noeuds formant une arborescence parcourue par l'unité de gestion mémoire MMU.

3. Méthode selon les revendications 1 ou 2 **caractérisée en ce que** la première sous-arborescence comprend des noeuds définis par le premier attribut de version O, lesdits noeuds contenant des pointeurs définis par le premier attribut de version O utilisés par l'application pour accéder aux pages mémoire physiques.

4. Méthode selon l'une des revendications 1 à 3 **caractérisée en ce que** la seconde sous-arborescence comprend au moins un noeud défini par le second attribut de version E, ledit noeud contenant un pointeur défini par le second attribut de version E utilisé par l'application pour désigner une nouvelle page mémoire destinée à stocker des données de la mise à jour.

5. Méthode selon l'une des revendications 1 à 4 **caractérisée en ce que** la table des pages TP est configurée par l'unité de gestion mémoire de sorte que l'application accède aux pages mémoire mises à jour en utilisant les pointeurs de la seconde sous-arborescence SA2 comprenant à la fois des noeuds définis par le premier attribut de version O et au moins un noeud défini par le second attribut de version E.

6. Méthode selon l'une des revendications 1 à 5 **caractérisée en ce que**, lors de la mise à jour des données des pages mémoire physiques, elle comprend des étapes additionnelles suivantes:
- exploration de la mémoire physique disponible et allocation de pages mémoires additionnelles destinées au stockage des données de la mise à jour,
création de noeuds supplémentaires désignant les pages additionnelles allouées précédemment
- modifier l'attribut de version d'au moins un noeud de l'arborescence lors de la configuration de la table des pages par l'unité de gestion mémoire de sorte que l'application accède aux noeuds supplémentaires désignant les pages additionnelles allouées précédemment.

7. Méthode l'une des revendications 1 à 4 **caractérisée en ce que**, lorsque les données de la mise à jour sont stockées dans les pages mémoire physique appropriées, elle comprend une étape de vérification consistant à comparer des données de contrôle stockées préalablement dans une ou plusieurs pages mémoire prédéterminées avec des données de contrôle calculées à partir des données de la mise à jour stockées dans les mémoires physiques.

8. Méthode selon la revendication 7 **caractérisée en ce que** lorsque la comparaison est réussie, l'unité de gestion mémoire MMU valide l'installation de la mise à jour et la modification des attributs de version des noeuds concernés par ladite mise à jour dans la table des pages.

9. Méthode selon la revendication 7 **caractérisée en ce que** lorsque la comparaison échoue, l'unité de gestion mémoire MMU bloque le passage de l'ancienne à la nouvelle version de l'application, ladite application fonctionnant dans les conditions précédant la mise à jour avec des attributs de version des noeuds de la table des pages inchangés.

10. Méthode selon la revendication 1 **caractérisée en ce que** des adresses de pages mémoire physiques sont lues à partir d'une mémoire cache associée à l'unité de gestion mémoire MMU, lesdites adresses de pages mémoire physiques stockées dans ladite mémoire cache étant obtenues à partir des adresses virtuelles correspondantes lors de précédents parcours de la table des pages.

11. Méthode l'une des revendications 1 à 6 **caractérisée en ce que,** lors de la modification de l'attribut de version d'un noeud de la table des pages TP par l'unité de gestion mémoire MMU, le contenu d'une page mémoire désignée par un pointeur dudit noeud défini par l'attribut de la version précédent la mise à jour est remplacé par le contenu de la page mémoire désignée par le pointeur défini par l'attribut de la nouvelle version.

12. Méthode selon la revendication 2 **caractérisée en ce que** les noeuds sont définis par un paramètre de configuration informant l'unité de gestion mémoire MMU sur le nombre de pointeurs associés au dit noeud définissant une caractéristique modifiable ou invariable du noeud lors d'une mise à jour.
